# EUROPEAN PATENT APPLICATION

(11) **EP 1 959 539 A1**
(43) Date of publication of application: **20.08.2008**
(21) Application number: 06834376.3
(22) Date of filing: 05.12.2006
(51) Int. Cl.: H02K 1/18

(54) **DYNAMO-ELECTRIC MACHINE**

(30) Priority: 08.12.2005 JP 2005354504
(71) Applicant: TOYOTA JIDOSHA KABUSHIKI KAISHA, Toyota-shi, Aichi-ken, 471-8571 (JP)
(72) Inventor: SANO, Shinya, Toyota-shi, Aichi 4718571 (JP); AIHARA, Hiroshi, Toyota-shi, Aichi 4718571 (JP); TAKIZAWA, Keiji, Toyota-shi, Aichi 4718571 (JP)
(74) Representative: Albutt, Anthony John
(86) International application number: PCT/JP2006/324621
(87) International publication number: WO 2007/066793

(57) **Abstract**

A first laminate layer block having a bolt fixing unit laminated/fixed by caulking a plurality of steel plates having lug metals protruding diametrically and a second laminate layer block laminated/fixed by caulking a plurality of steel plates not having lug metals are rolled and laminate on part of a steel plate, and are welded on the surfaces of their side surface in a laminate direction to be laminated and integrated. Accordingly, it is possible to prevent the axial force of the fixed bolt from being lowered due to thermal shock of a stator to decrease the occurrence of vibration or noise, and reduce vibration or noise by increasing the fixing levels of the stator and a case.

## Description

### [Technical Field]

The present invention relates to the structure of a stator of a dynamo-electric machine.

### [Background Art]

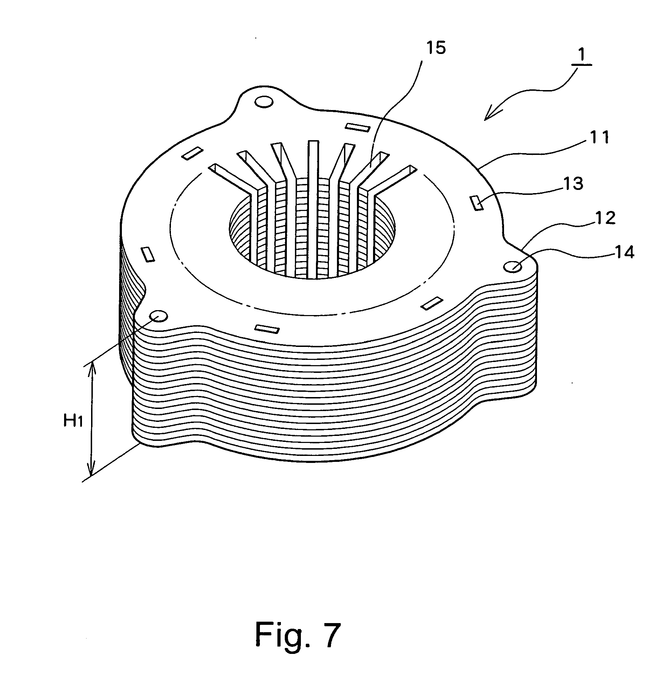

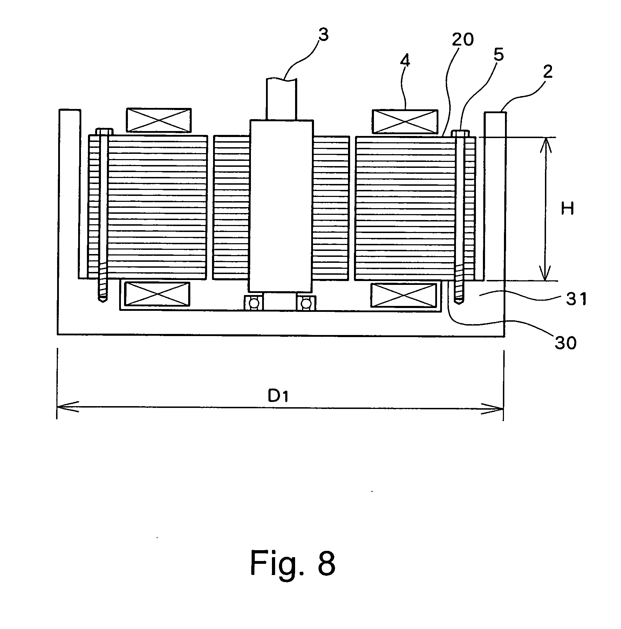

In recent years, hybrid automobiles in which an engine and an electric motor are combined have come to be manufactured in great number. The driving electric motor installed in such hybrid automobiles is commonly, as shown in Fig. 8, configured by a stator 20 that generates a magnetic field, a rotor 3 that retrieves output, and a case 2 that houses these. As shown in Fig. 7, a stator core 1 of the stator 20 of the electric motor is formed by stacking electromagnetic steel plates 11 in order to reduce an inductive current resulting from the magnetic field that passes through the stator core 1.

For example, as described in Japanese Patent Publications JP-A-2005-137057 and JP-A-6-245415, the stator 20 is manufactured as follows. First, a die is used to punch out electromagnetic steel plates of a fixed size into the shape of the stator core 1, including coil slots 15 and lugs 12 in which bolt holes 14 are formed. Next, 100 to 150 of the stator-shaped electromagnetic plates 11 that have been punched are sequentially stacked, and crimping portions 13 are crimped by a press machine to tie up the electromagnetic plates 11 and manufacture the stator core 1. Insulating paper is attached on the slots 15 of the finished stator core 1, and coils are wound. When the coils are wound, coil ends 4 are formed on both end surfaces of the stator 20. When the coil winding ends, the entire stator 20 is impregnated with varnish to fix the coils in the slots and provide insulation. During this process, the varnish covers not only the outer surfaces of the electromagnetic steel plates of the stator, but also gaps between stacking surfaces of the electromagnetic steel plates. The assembled stator 20 is fixed by fixing bolts 5 in the case 2 as shown in Fig. 8, and the rotor 3 is assembled in the center of the stator 20. In this manner, after the electromagnetic steel plates configuring the stator core 1 have been tied up by crimping, they are fixed to the case 2 by the fixing bolts 5, whereby the entire shape is held and fixed.

When a hybrid automobile is driven by the electric motor, large load fluctuations occasionally occur because of sudden changes in the traveling state and normal drive force. When such a large load fluctuation occurs, thermal shock resulting from a rise in the temperature of the stator core 1 sometimes occurs, the electromagnetic plates 11 configuring the stator 20 suddenly expand, and the varnish in the cavities between the electromagnetic steel plates 11 tends to degrade or be damaged. Because varnish between the electromagnetic steel plates 11 that has been compressed and damaged in this manner does not return to its original thickness, when the temperature of the stator 20 falls back to its normal temperature and the thermal expansion of the electromagnetic steel plates 11 returns to normal, the overall thickness of the stator core 1 fastened by the fixing bolts 5 decreases, and the fastening force of the fixing bolts 5 reduces. Additionally, there has been the problem that, because of the fastening force reduction of the fixing bolts 5, the force with which the stator 20 is fixed to the electric motor reduces, and vibration and noise of the electric motor increase. Because the amount of varnish damaged by thermal shock is proportional to the fastening thickness of the bolts, reducing the stacking thickness of the bolt-fixed portions can prevent the fixing force reduction of the bolts. However, because the bolts have the function not only of fixing the stator 20 to the case 2 but also of stacking and tying up the electromagnetic steel plates, simply reducing the thickness of the bolt-fixed portions is not sufficient to solve the above-described problem, and simultaneously reducing the thickness of the bolt-fixed portions while ensuring the reliability of the fixing of the stacking electromagnetic steel plates must be made reliable.

Further, in the stator 20 of a conventional electric motor as shown in Fig. 8, because only a seat surface 30 on the lower portion of the stator 20 is seated in the case 2 and only this portion contacts with and is fixed to the case, there has been problem that the area of contact between the case 2 and the stator 1 has been insufficient, and vibration and noise increase.

Thus, the present invention provides an advantageous dynamo-electric machine in which reduction in the axial force of the fixing bolts resulting from thermal shock of the stator is prevented, occurrence of vibration and noise of the electric motor are reduced, and the attachment area between the stator and the case is increased, which further contributes to reduction of vibration and noise.

### [Disclosure of the Invention]

The present invention is a dynamo-electric machine including a stator and a support component that supports the stator, wherein the stator is formed by stacking steel plates, crimping the steel plates in a stacking direction, and side surface of the stator is welded with respect to the stacking direction such that the steel plates are stacked and integrated, lugs that project in a radial direction are disposed on some of the steel plates, the lugs are stacked, whereby bolt-fixed portions are formed, and the stator is fastened and fixed to the support component by bolts. Here, it is preferable for the stator to include a first stacking block including bolt-fixed portions formed by crimping, stacking and fixing plural steel plates including lugs that project in the radial direction on some of steel plates and a second stacking block formed by crimping, stacking and tying up plural metal plates that do not include lugs, and for the stator to be formed by roll-stacking the first stacking block and the second stacking block and welding surfaces of side surfaces with respect to the stacking direction such that the stacking blocks are stacked and integrated. Further, the present invention also provides a dynamo-electric machine including a stator and a support component that supports the stator, wherein as for the stator, plural stacking blocks including bolt-fixed portions formed by crimping, stacking and tying up plural steel plates including lugs that project in a radial direction in positions shifted 180 degrees in a circumferential direction of the stator are roll-stacked such that the bolt-fixed portions become equidistant in the circumferential direction, the stator is formed by welding on side surface with respect to the stacking direction such that the stacking blocks are stacked and integrated, and the stator is fastened and fixed to the support component by bolts.

By employing the present invention, it is possible to prevent a reduction in the axial force of the fixing bolts resulting from thermal shock of the stator, reduce the occurrence of vibration and noise, and increase the degree of fixing between the stator and the case to reduce vibration and noise.

### [Brief Description of the Drawings]

Fig. 1 is a perspective view showing a process of manufacturing a stator core in a first embodiment of the present invention.
Fig. 2 is a cross-sectional view of a dynamo-electric machine in the first embodiment of the present invention.
Fig. 3 is a perspective view of a stator core in a second embodiment of the present invention.
Fig. 4 is a cross-sectional view of a dynamo-electric machine in the second embodiment of the present invention.
Fig. 5 is a perspective view showing a process of manufacturing a stator core in a third embodiment of the present invention.
Fig. 6 is a cross-sectional diagram of a dynamo-electric machine in the third embodiment of the present invention.
Fig. 7 is a perspective view of a stator core according to prior art.
Fig. 8 is a cross-sectional diagram of an electric motor according to prior art.

### [Best Modes for Carrying out the Invention]

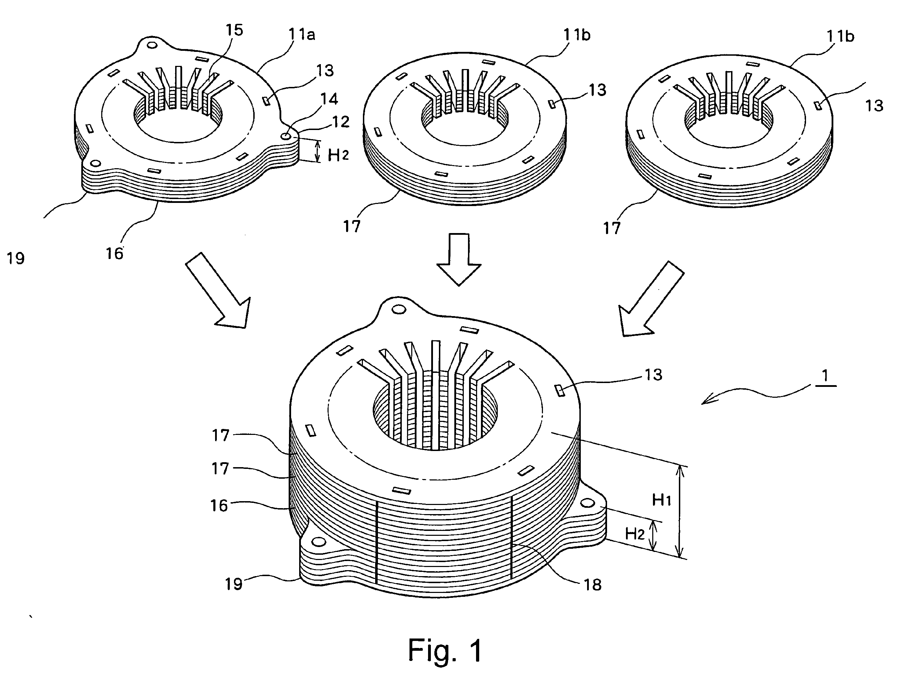

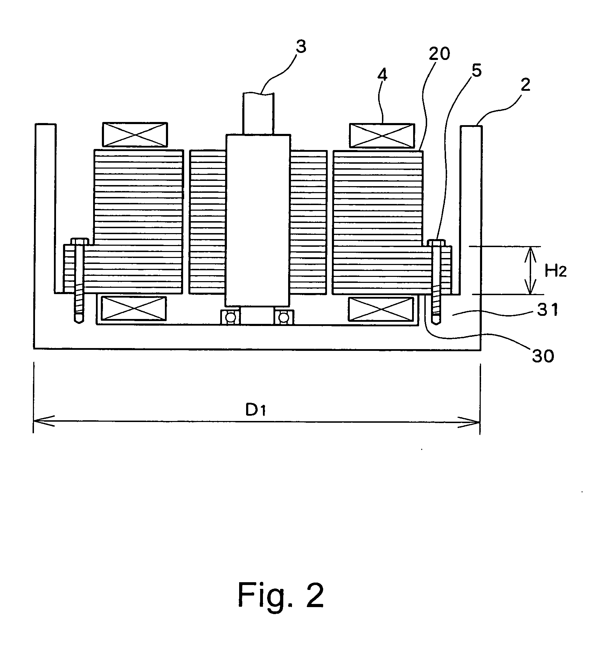

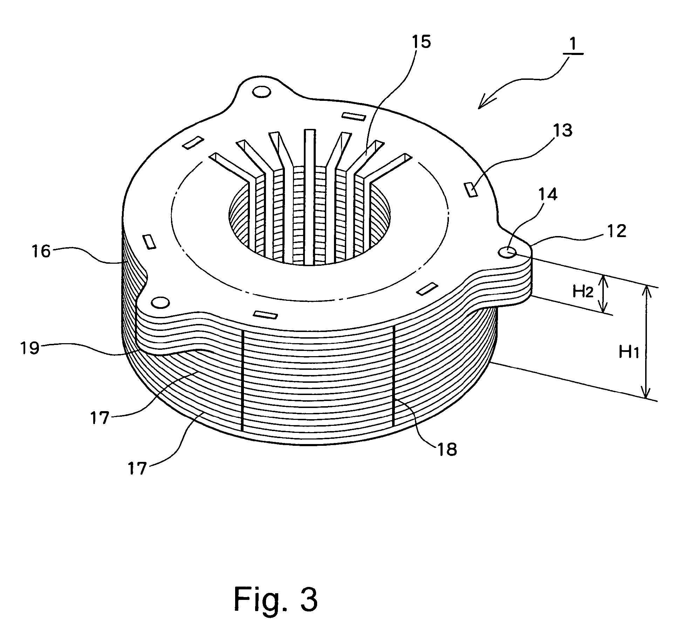

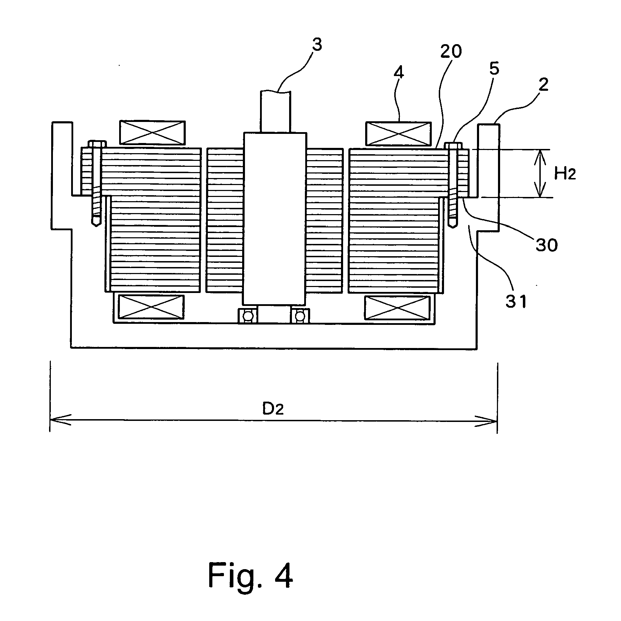

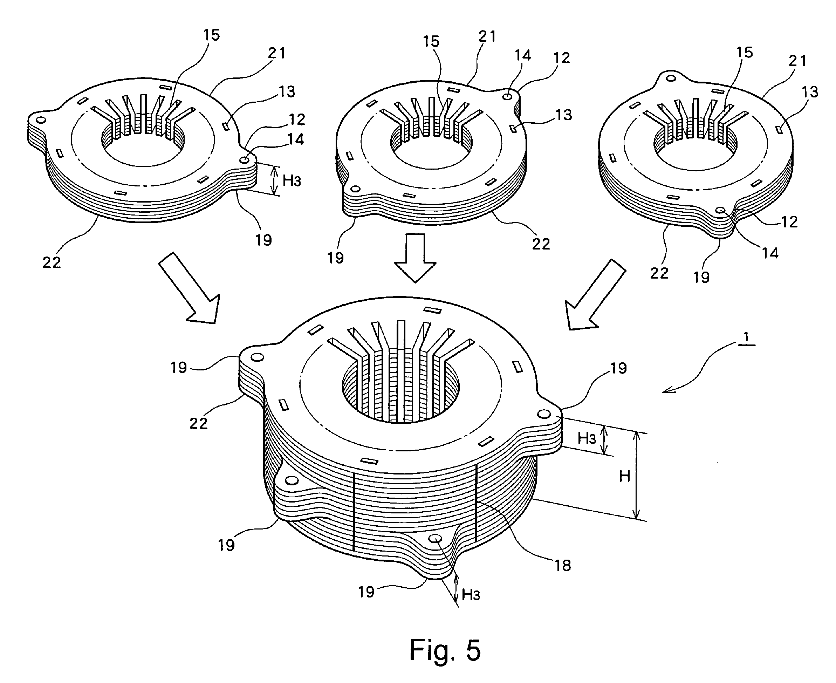

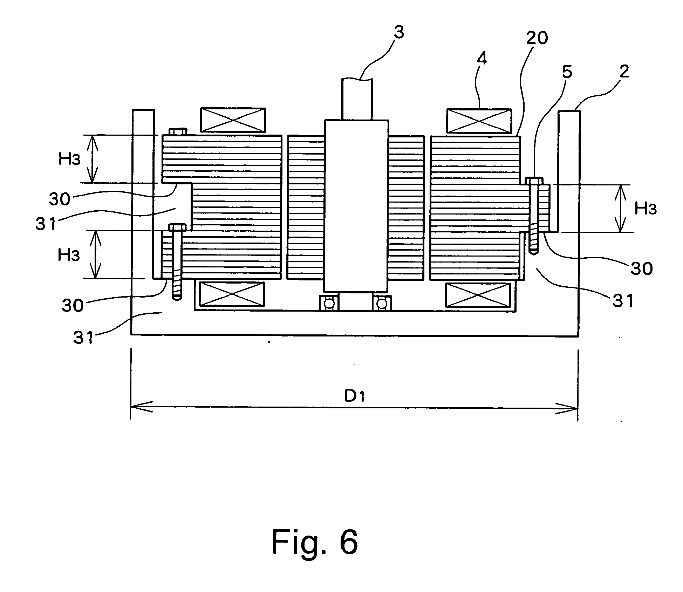

Below, embodiments of the present invention will be described in detail referring to the drawings. Figs. 1 and 2 are explanatory drawings of a stator core 1 of a dynamo-electric machine of a first embodiment of the present invention, Figs. 3 and 4 are explanations of a stator core 1 of a dynamo-electric machine of a second embodiment of the present invention, and Figs. 5 and 6 are explanatory drawings of a stator core 1 of a dynamo-electric machine of a third embodiment of the present invention.

Fig. 1 is a perspective view showing a process of manufacturing the stator core 1 in the first embodiment of the present invention. The stator core 1 is configured by a first stacking block 16 having lugs 12 in which bolt holes 14 are formed and by second stacking blocks 17 having no lugs 12. Similar to the related art described above, the first stacking block 16 is manufactured by first using a die to punch out electromagnetic steel plates of a fixed size in the shape of the first stacking block 16 including slots 15 for coils and the lugs 12 in which the bolt holes 14 are formed, sequentially stacking 50 to 60 stator-shaped electromagnetic steel plates 11a that have been punched out, and crimping and fixing crimping portions 13 with a press machine. Further, and also similar to the above, the second stacking blocks 17 are also manufactured by punching 50 to 60 electromagnetic steel plates 11b into a circular shape including the slots 15 and then stacking, crimping, and fixing these. The first stacking block 16 and the second stacking blocks 17 that have been finished in this manner are stacked. At this time, each of the blocks is rotated a constant angle each in a circumferential direction of the stator core and stacked such that burrs or the like resulting from punching are gathered in the same portion and such that the blocks are not stacked with slant. This is called roll stacking. When the stator core 1 comprises three blocks as in the first embodiment, a method is employed where each of the blocks is rotated 120 degrees each and stacked.

The outer surface of each of the roll-stacked blocks is fixed by welds 18. For the welding, extremely thin portions of surfaces are welded onto surfaces of side surfaces with respect to the stacking direction by TiG welding or the like in order to minimize both occurrences of eddy currents at the welded portions and iron loss. Further, in order to ensure the flatness of the stator end surfaces, the steel plates (stator end portions 6) configuring the end surfaces of the stator core 1 are assembled without welding. In this manner, because each of the electromagnetic steel plates is stacked and fixed by crimping and welding, the electromagnetic steel plates have sufficient fixing strength even without being fixed by bolts.

The assembled stator core 1 has a height H₁, while the thickness of the first stacking block 16 is H₂ which is smaller than H₁, and this becomes the thickness of bolt-fixed portions 19. Coils are wound around the assembled stator core 1, and after the stator 20 impregnated with varnish has been assembled, it is installed in a case 2 of an electric motor as shown in Fig. 2 and fixed by bolts 5. As shown in Fig. 2, the thickness of the portions of the stator core 1 fixed by the bolts is H₂, which is about 1/3 of the thickness H₁ of the bolt-fixed portions of the stator core 1 of the prior art.

The stator core 1 that has been configured in this manner has a structure in which sufficient tying up strength is provided because of the use of both crimping and welding, and reducing the bolt fixing thickness will therefore not reduce the tying up strength as much as in the stator of the prior art, and an advantage is provided in that there is little reduction in the axial force of the bolts resulting from thermal shock, and both vibration and noise can therefore be reliably inhibited.

A second embodiment of the present invention is, as shown in Fig. 3, one wherein the bolt-fixed portions 19 of the stator core 1 are disposed on the upper portion of the stator core 1. The manufacturing method and the like are otherwise the same as in the preceding first embodiment. As shown in Fig. 4, the stator core 1 is fixed at its upper portion to the case 2 by bolts 5. Similarly as in the first embodiment, the bolt fixing thickness can be reduced without reducing the tying up strength, so it provides an effect in that there is little reduction in the axial force of the bolts resulting from thermal shock and vibration and noise can be controlled, and the diameter of the lower portion of the stator 20 from the conventional D₁ to D₂ can be further reduced, thereby providing an advantageous effect that the overall size of the electric motor can be reduced.

Fig. 5 is a perspective view showing a process of manufacturing a stator core 1 according a third embodiment of the invention. The stator core 1 is manufactured from three stacking blocks 22. Similarly as in the first embodiment, each of the stacking blocks is manufactured by punching out electromagnetic steel plates 21 including, in positions shifted 180 degrees in the circumferential direction of the stator core 1, lugs 12 in which bolt holes 14 are formed, sequentially stacking 50 to 60 of the stator-shaped electromagnetic steel plates 21 that have been punched out, and crimping and fixing crimping portions 13 using a press machine. The plural stacking blocks 22 are manufactured by the same method. The stacking blocks 22 that have been manufactured are roll-stacked such that burrs or the like of the steel plates resulting from punching are gathered in the same portion and so as to not be stacked with slant. The roll stacking is performed by rotating the blocks 120 degrees each such that the bolt-fixed portions 19 that the blocks include become equidistant in the circumferential direction of the stator core 1. Thus, the bolt-fixing portions 19 are disposed at intervals of 60 degrees so that they do not overlap each other. After the roll stacking, the outer surface of the stator core is fixed by welds 18 in the same manner as in the first embodiment.

Coils are wound in the slots 15 in the stator core 1 that has been assembled, the entire stator 20 is impregnated with varnish, and the stator 20 is completed. The assembled stator 20 is installed into the case 2 as shown in Fig. 6 and fixed by the fixing bolts 5. In the third embodiment, a total of six bolt-fixed portions are provided, two on each of the stacking blocks 22; the bolt-fixed portions 19 have a thickness that is 1/3 that of the entire stacking thickness, for a total of six, fixing bases 31 are disposed inside the case 2 at positions corresponding to the positions of the lower portions of the bolt-fixed portions 19, and the stator 20 is fixed by bolts at six places to the case 2.

In the third embodiment of the present invention, similar to the first embodiment of the present invention, each of the electromagnetic steel plates is stacked and tied up by crimping and welding, so it has sufficient fixing strength even when the number of fixing bolts 5 of each of the stacking blocks 22 is two. Thus, the bolt fixing thickness can be reduced without reducing the tying up strength, so it provides an effect in that there is little reduction in the axial force of the bolts resulting from thermal shock, and vibration and noise can be controlled. Further, because the bolt-fixed portions 19 of each of the stacking blocks 22 are disposed so as to be shifted 180 degrees in the circumferential direction of the stator, as stated in the above manufacturing process, even when they are roll-stacked 120 degrees each, the bolt-fixed portions 19 do not overlap in the circumferential direction, and the stator 20 can be fixed to the case 2 by the bolt-fixed portions 19 at six places. Thus, the fixing strength is increased due to the increased contact area between the stator 20 and the case 2. Moreover, because the stator 20 and the case 2 are fixed at stacking direction intermediate portions of the stator core 1, the overall rigidity of the stator 20 and the case 2 is improved, and noise, vibration, and noise resulting from a mass damper effect, can be reduced. Further, because the third embodiment of the present invention is manufactured by a process of punching out and superposing electromagnetic steel plates of the same shape, production efficiency can be improved.

The present invention is not limited to an electric motor, but can be applied to any dynamo-electric machine including a stator.

## Claims

1. A dynamo-electric machine including a stator and a support component that supports the stator, wherein
the stator is formed by stacking steel plates, crimping the steel plates in a stacking direction, and welding surfaces of side surfaces with respect to the stacking direction such that the steel plates are stacked and integrated,
lugs that project in a radial direction are disposed on some of the steel plates,
the lugs are stacked, whereby bolt-fixed portions are formed, and
the stator is fastened and fixed to the support component by bolts.

2. The dynamo-electric machine of claim 1, wherein
the stator includes
a first stacking block including bolt-fixed portions formed by crimping, stacking and tying up plural steel plates including lugs that project in the radial direction on steel plates, and
a second stacking block formed by crimping, stacking and tying up the plural metal plates that do not include the lugs, and
the stator is formed by roll-stacking the first stacking block and the second stacking block and
side surface of the stator is welded with respect to the stacking direction such that the stacking blocks are stacked and integrated.

3. A dynamo-electric machine including a stator and a support component that supports the stator, wherein
plural stacked blocks including bolt-fixed portions formed by crimping, stacking, and tying up plural steel plates including lugs that project in a radial direction in positions shifted 180 degrees in a circumferential direction of the stator are roll-stacked such that the bolt-fixed portions become equidistant in the circumferential direction,
the stator is formed by welding on its side surface with respect to the stacking direction such that the stacking blocks are stacked and integrated, and
the stator is fastened and fixed to the support component by bolts.
